# EUROPEAN PATENT APPLICATION

(11) **EP 0 799 980 A1**
(43) Date of publication of application: **08.10.1997**
(21) Application number: 97105635.3
(22) Date of filing: 04.04.1997
(51) Int. Cl.: F02B 33/26, F02B 33/04, F02B 61/02

(54) **Vehicle having a supercharged internal combustion engine unit**

(30) Priority: 04.04.1996 JP 82697/96
(71) Applicant: YAMAHA HATSUDOKI KABUSHIKI KAISHA, Iwata-shi Shizuoka-ken, 438 (JP)
(72) Inventor: Taue, Jun, Iwata-shi, Shizuoka-ken (JP)
(74) Representative: Grünecker, Kinkeldey, Stockmair & Schwanhäusser Anwaltssozietät

(57) **Abstract**

A vehicle having a supercharged internal combustion engine unit pivotably mounted on a body frame of said vehicle. Said engine unit comprises an engine body and a rear wheel transmission integrally fastened to each other, and a supercharge system. An air cleaner is disposed on the upstream side of the supercharge system for filtering fresh air. Said air cleaner and said supercharge system are fastened to said engine unit for pivotal movement together with said engine unit.

## Description

This invention relates to a vehicle having a supercharged internal combustion engine unit pivotably mounted on a body frame of said vehicle, said engine unit comprising an engine body and a rear wheel transmission integrally fastened to each other, and a supercharge system.

In recent years, a supercharge system has been proposed in which the air drawn into the crank chamber is compressed by the swinging movement of the connecting rod and then supplied to the combustion chamber for the purpose of improving engine output (eg, see Japanese Unexamined Patent Publication Hei 6-93869). The supercharge system provided with this connecting rod type supercharge mechanism or a piston type supercharging mechanism for compressing air drawn into the crank chamber through reciprocating movement of pistons, is called a crank chamber type supercharge system, in which a considerable amount of space is necessary for arranging an air cleaner for filtering air to either of the above described supercharging mechanisms, and supercharge tank for reducing pressure variation of pressurized air supplied to the cylinder, and parts for connecting system components to each other, such as an intake pipe and the like, are also needed.

An idea can be suggested of incorporating the above described crank chamber type supercharge system into a motorcycle, three wheeler, or four wheeled vehicle carrying a unit-swinging engine such as a starter.
In mounting such a supercharge system on a vehicle with a unit-swinging engine, a great flexibility, for example, may be needed in the intake system, or a large space may be necessary for arrangement due to the up and down swinging movement of the whole engine unit, depending on the layout of the above described system components. As a result, problems might arise of complicated structure and increased size of the whole system, and accordingly a larger engine and hence a larger vehicle.

Accordingly, it is an objective of the present invention to provide an improved vehicle having a supercharged internal combustion engine unit as indicated above having a light-weight supercharged system being compact and having a simple structure.

According to the present invention, this objective is solved for a vehicle having a supercharged internal combustion engine unit as indicated above by an air cleaner disposed on the upstream side of the supercharge system for filtering fresh air, said air cleaner and said supercharge system are fastened to said engine unit for pivotal movement together with said engine unit.

According to a preferred embodiment of the present invention, the supercharge system comprises a pressurized intake air passage for inducing compressed fresh air into a combustion chamber via an intake port operable by an intake valve.

The air cleaner, supercharge system, and pressurized intake air passage are arranged for swinging movement together with the engine unit, so that no great flexibility is necessary in the intake system connecting these components, and the structure can be simplified by as much degree as the piping is simplified. In addition, these components arc disposed collectively on the engine unit, so that the layout space is reduced to a necessary minimum. As a result, a light weight and compact vehicle can be realized by incorporating a supercharge system capable of avoiding complicated structure and increased size of the whole system.

In case that pressure variations of the pressurized fresh air are likely to occur, it is advantageous when a supercharge tank for reducing pressure variations of the pressurized fresh air being provided in the intake air passage, said supercharge tank being mounted to the engine unit and arranged for pivotal movement together with the engine unit.

A further improvement of the compactness of this supercharged system is achievable when said supercharge system comprises a connecting rod type supercharging system.

In that case, it is advantageous when outer surfaces of a connecting rod are adapted to face, in sealing condition, to an inside circumferential wall of a crank case, right and left walls of piston cutouts, inside walls of right and left crown webs, respectively, or the respective corresponding surfaces and walls are brought into contact with each other for tight sealing in sliding relation that the crank chamber is dividable by said piston rod into two chambers, a suction chamber and a compression chamber and the crank case is formed with a suction port adapted to communicate with the suction chamber, and with a delivery port adapted to communicate with the compression chamber.

Although, as already indicated above, this vehicle may be one of a large variety of different vehicles according to an advantageous and preferred embodiment of the present invention, this vehicle is a scooter-type motor cycle.

Other preferred embodiments of the present invention are laid down in further dependent claims.

In the following, the present invention is explained in greater detail with respect to several embodiments thereof in conjunction with the accompanying drawings, wherein:
Fig. 1 is a side view illustrating a scooter type motorcycle incorporating a supercharge system according to one embodiment of this invention;
Fig. 2 is a plan view of the scooter type motorcycle incorporating the supercharge system;
Fig. 3 is a rear view of the scooter type motorcycle incorporating the supercharge system;
Fig. 4 is a side view of the scooter type motorcycle incorporating the supercharge system;
Fig. 5 is a diagrammatic sectional rear view of the scooter type motorcycle incorporating the supercharge system;
Fig. 6 is a schematic illustration of the supercharged engine;
Fig. 7 is a plan view of a scooter type motorcycle incorporating a supercharge system according to another embodiment;
Fig. 8 is a rear view of the scooter type motorcycle incorporating the supercharge system of Fig. 7; and
Fig. 9 is a schematic illustration of a supercharged engine according to another embodiment.

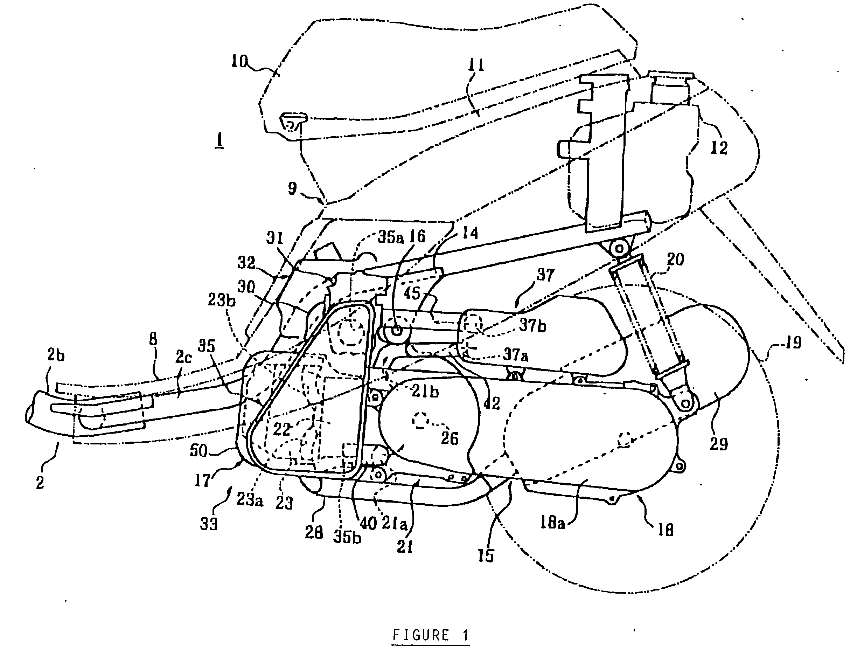

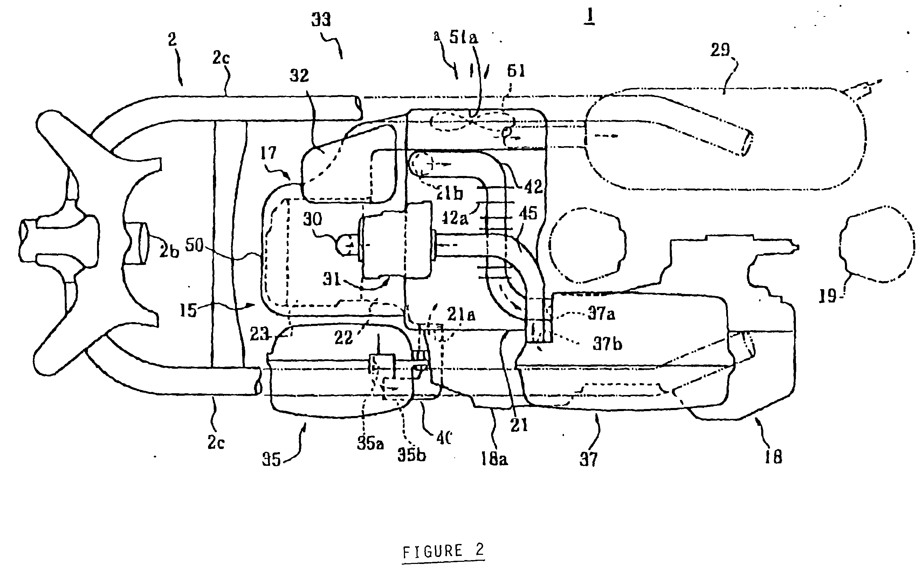

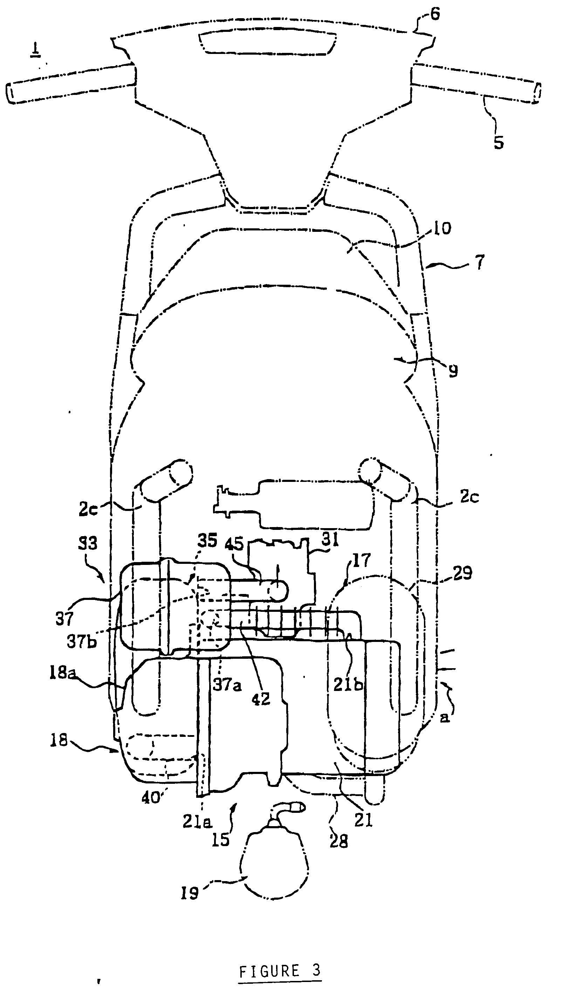

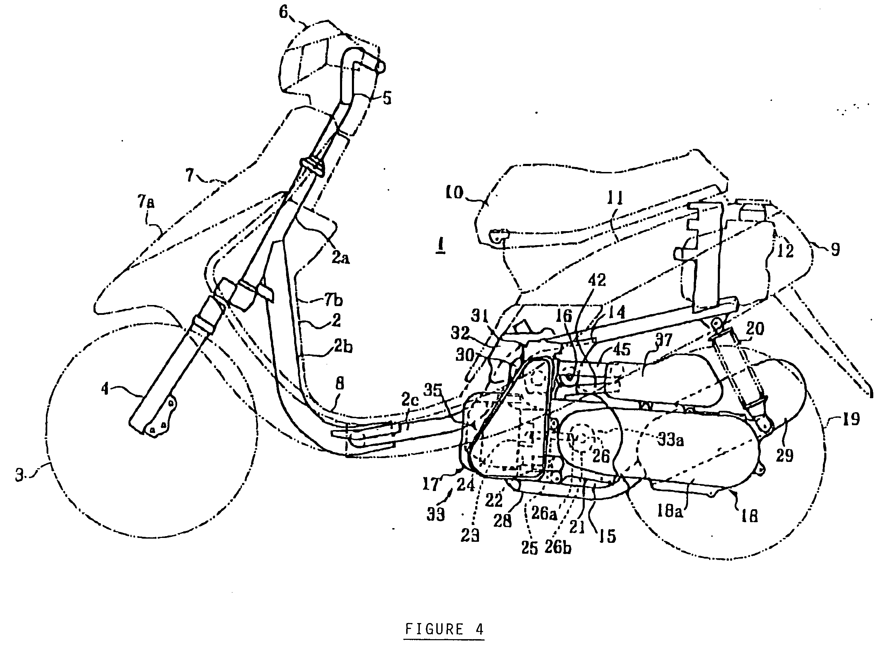

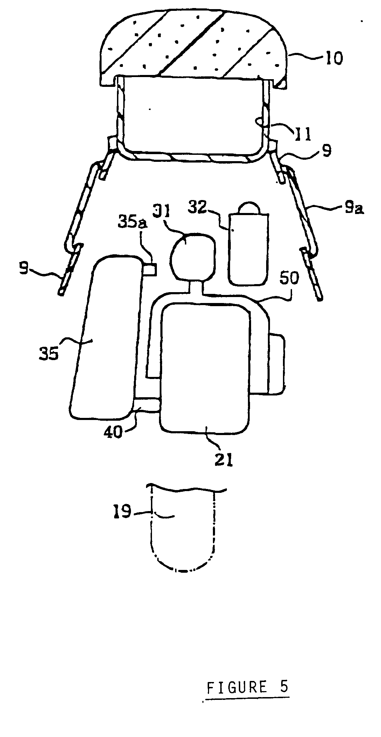

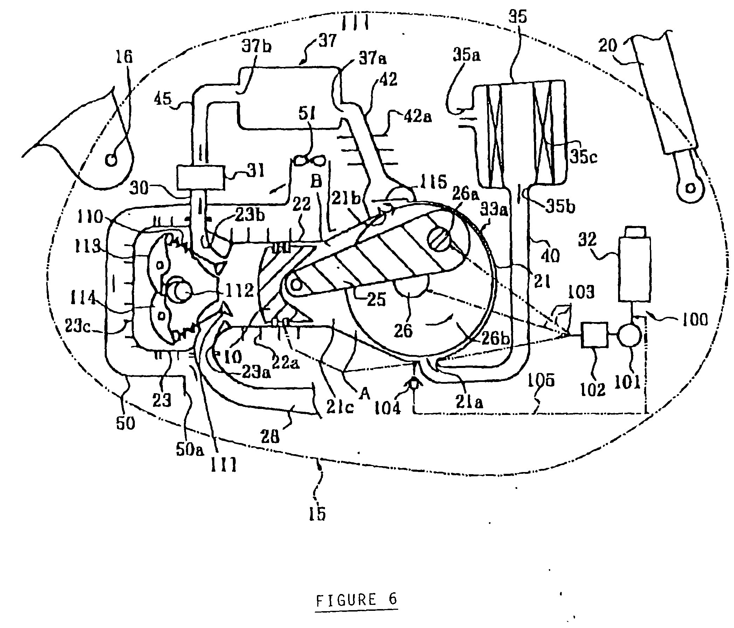

An embodiment of a vehicle carrying a supercharge system of this invention will be described below with reference to the accompanying drawings. Fig. 1 through Fig. 6 are views illustrating a scooter type motorcycle incorporating a supercharge system according to one embodiment of this invention. Fig. 1 through Fig. 3 are a side view, a plan view, and a rear view of this embodiment, respectively. Fig. 4 is a side view of the scooter type motorcycle of this embodiment, and Fig. 5 and Fig. 6 are grammatical views showing the positional relation of the components of the supercharge system, air flow etc.

In this specification, the terms, "right" and "left," is defined as right and left when viewed in the moving direction of the vehicle, respectively. In the figure, numeral 1 designates a scooter type motorcycle of this embodiment. A body frame 2 of the motorcycle is of an under bone type, in which a head pipe 2a is connected to the upper end of a main frame 2b in the shape of a letter L in profile; the main frame 2b is connected at the lower end to the front end of a pair of right and left side frames 2c; and the side frames 2c rises upwardly and further extends rearwardly. To the head pipe 2a is fitted, for steering movement in the right and left directions, a front fork 4 supporting at the lower end a front wheel 3; and to the upper end of the front fork 4 is mounted fixedly a steering handle 5. The regions around the steering handle 5 and the head pipe 2a are covered by a handle cover 6 and a separate type front cover 7 divided by a front cover 7a and rear cover 7b, respectively.

At the connection of the main frame 2b and side frames 2c is disposed a foot board 8 constituting a foot rest portion and on both right and left sides of the side frames 2c extends a side cover 9. Upwardly of the side cover 9 is located a seat 10, under which are mounted a tool box 11, a fuel tank 12 etc. Downwardly of the upper bent portion of the right and left side frames 2c is mounted a unit-swinging engine unit 15.

The engine unit 15 is comprised of an engine body 17 supported by a pivot shaft 16 which is provided between the side frames 2c through a bracket 14, for swinging movement around the pivot shaft, and a rear wheel transmission 18 formed integrally with and extending rearwardly on the left side of the engine body 17. In the rear wheel transmission 18 is incorporated a belt driven type stepless speed change mechanism, and on the rear end of the transmission 18 is supported a rear wheel 19. On the upper surface of the rear end of a transmission case 18a of the rear wheel transmission 18 is supported the lower end of a rear suspension 20, the upper end of which is supported on the side frames 2c.

The engine body 17 is of a forced air cooling four-stroke single cylinder type. The engine body is so arranged that to a crank case 21 are connected a cylinder black 22 and a cylinder head 23, and in the cylinder bore of the cylinder block 22 is inserted for sliding movement a piston 24, which is connected to a crank pin 26a of a crank shaft 26 through a connecting rod 25. In Fig. 6 the crank shaft 26 turnable counterclockwise (in the direction shown by the arrow) is fitted, at the left end, with a drive pulley (not shown), and at the right end, with a forced cooling fan 51 for supplying cooling air to the engine body 17.
The engine body 17 is surrounded by an air shroud 50; cooling air (a) drawn by the cooling fan 51 is adapted to cool dawn the cylinder head 23, cylinder block 22 etc when passing through the space between the engine body 17 and the air shroud, and discharged from an outlet 50a.
Numerals 22a and 23c designate cylinder block cooling fins and cylinder head cooling fins for increasing radiating areas, respectively.

An exhaust pipe 28 is connected to an exhaust port 23a provided at the bottom of the cylinder head 23, and to the rear end of the exhaust pipe 28 is connected a muffler 29 disposed on the right side of the rear wheel 19. To an intake port 23b provided at the top of the cylinder head 23 is connected a pressurized intake air pipe 30 constituting a pressurized intake air passage, and to the upstream end of the pressurized intake air pipe 30 is connected a carburetor 31 disposed upwardly of the cylinder block 22. An oil tank 32 is disposed on the right side of the carburetor.

The exhaust port 23a and the intake port 23b are opened/closed by an exhaust valve 111 and an intake valve 110 respectively, and these valves 111, 110 are driven for opening/ closing by a cam shaft 112 through an exhaust side tappet 114 and an intake side tappet 113, respectively. The engine unit 15 is provided with a supercharge system 33 of a connecting rod type, which is comprised of a connecting rod type supercharging mechanism 33a, an air cleaner 35 for filtering air to the supercharging mechanism 33a, and a supercharge tank 37 for reducing pressure variation of compressed air supplied to the cylinder bore, by storing the compressed air from the supercharging mechanism 33a, and these supercharge system components 35-37 are all mounted to the unit-swinging engine unit 15 for swinging movement together with the unit 15.

In the connecting rod type supercharging mechanism 33a, the outer surfaces of the connecting rod 25 are adapted to face, in sealed relation, to the inside circumferential wall of the crank case 21, right and left walls of the piston cutouts, and the inside walls of right and left crown webs 26b, respectively, or the respective corresponding surface and wall are brought into contact with each other for tight sealing in sliding relation, so that the crank chamber 21 is divided into two chambers, a suction chamber A and a compression chamber B, and the crank case 21 is formed, at the lower left side, with a suction port 21a in communication with the suction chamber A, and at the upper right side, with a delivery port 21b in communication with the compression chamber B. In this way, a volumetric supercharging mechanism is constituted for compressing drawn air through the swinging movement of the connecting rod 25. Such a system is disclosed in detail in the foregoing Japanese Unexamined Patent Publication Hei 6-93869.

Therefore, it is sufficient for the operation of said supercharging mechanism 33a that there are formed small gaps between the respective corresponding walls and surfaces, but it is also possible to have sliding contact between same.

To the connecting rod type supercharging mechanism 33a is connected a lubricating device 100. The lubricating device 100 is so arranged that lubricating oil from an oil tank 32 is drawn to be pressurized by an oil pump 102 through an oil strainer 101; the pressurized lubricating oil is supplied, through delivery pipes 103, to the sliding surfaces of the piston 10, connecting rod 25, and crank webs 26b etc, and the bearing sections of the crank shaft 26: and the lubricating oil which has been collected in the bottom of the crank case, is sent back to be recycled through an oil drain return pipe 105 having a check valve 104 therein.

In the connecting rod type supercharging mechanism 33a of this embodiment, the compression chamber at a higher supercharge pressure is disposed in the upper side and the suction chamber is in the lower side, air drawn from the bottom of the crank case 21 being pressurized and delivered from the top of the same. Therefore, the lubricating oil supplied by the lubricating device 100 will be separated from the compressed air by gravity in the crank chamber easily and reliably, thereby preventing the lubricating oil from being mixed into the pressurized air. The separated lubricating oil serves as a sealing agent on the sliding surfaces of the connecting rod etc and the walls in the crank case 21, thereby increasing airtightness and supercharge pressure.

The air cleaner 35 of approximately a triangular shape in profile and containing an air cleaner element 35c, is disposed in the corner on the left of the left side walls of the cylinder block 22 and cylinder head 23 and in front of the front wall of the transmission case 18a when viewed in top plan, and bolted to the transmission case 18a and crank case 21. An inlet 35a of the air cleaner 35 is open, toward the inner side of the vehicle body, to the space inside the side cover 9, and an outlet 35b is located at the bottom. The outlet 35b is in communication with the suction port 21a of the crank case 21 through an air induction pipe 40.

In this way, air passing through the air cleaner 35 flows downwardly to be inducted into the supercharging mechanism, thereby preventing the air cleaner from being damaged by lubricating oil due to blowing back of the intake air from the crank case. Further, the outlet 35b of the air cleaner 35 is located in the vicinity of the suction port 21a of the supercharging mechanism, so that a shorter path length is effected for the air induction pipe 40, thereby providing the smaller suction resistance. Therefore, higher supercharge pressure and thus improved engine performance can be achieved. Moreover, the inlet 35a of the air cleaner 35 is open to the upper region of the space inside the side cover 9, so that ingress of rainwater etc into the air cleaner 35 can be avoided.

The supercharge tank 37, which is intended to store pressurized fresh air for the purpose of reducing pressure variation of the pressurized fresh air even when timing difference may happen between pressurized fresh air supply from the supercharging system 33 and pressurized fresh air delivery to the combustion chamber, is disposed between the rear wheel transmission 18 and the side frames 2c, and bolted on the top surface of the transmission case 18. Thus, the supercharge tank 37 is located at approximately the same height as the carburetor 31. In the lower front wall of the supercharge tank 37 is provided a fresh air inlet 37a; a first pressurized intake air pipe 42 is connected to the delivery port 21b of the crank case 21; and in the delivery port 21b is disposed a reed valve 115 for preventing back flow of the pressurized air into the crank case 21. On the first pressurized intake air pipe 42 are provided integrally air cooling fins 42a serving as a means for cooling fresh air at a raised temperature caused by pressurization. In the upper inside wall of the supercharge tank 37 is formed an outlet 37b, which is in communication with the carburetor 31 through a second pressurized intake air pipe 45 disposed upwardly of the crank case 21.
In this way, the supercharge tank 37 and the carburetor 31 are located at approximately the same height, so that the intake air pipe 45 can be simplified in its shape and improved in its degree of freedom with respect to the shape. Further, the supercharge tank 37 is disposed on the transmission case side, ie, on the side opposite to the muffler 20, so that the lubricating oil collected in the supercharge tank 37 can not dip onto the muffler 29 if leakage of the lubricating oil may happen, thereby preventing white smoke problems etc.

Now, functions and effects of this embodiment will be explained.

In the supercharging system 33 of this embodiment, the air filtered by the air cleaner 35 is drawn into the crank case 21 through the induction pipe 40 and compressed by the swinging movement of the connecting rod 25, and the compressed air is sent to the supercharge rank 37 through the first pressurized intake air pipe 42 to be stored. The compressed air in the supercharge tank 37 is supplied to the carburetor 31 through the second pressurized intake air pipe 45 to form a mixture, which is supplied to the combustion chamber through the third pressurized intake air pipe 30. Exhaust gas is discharged from the muffler 29 through the exhaust pipe 28 (see the arrows shown in dash line in Fig. 1-Fig. 3).

In the system of the embodiment operating as described above, the air cleaner 35 and the supercharge tank 37 constituting the supercharging system 33, are mounted fixedly To the unit-swinging engine unit 15 itself, so that the system components 35-37 swing in association with up and down swinging movement of the engine unit 15. Therefore, there is no relative movement between these components, no flexibility is needed in providing communication between the components 35-37, thereby simplifying piping configurations. Further, materials and shapes with higher rigidity and strength can be adopted for the pipes 40, 42-45, so that mounting strength of the whole system can be improved.

If vibration proof rubbers are interposed at the mounting sections between the air cleaner 35, and the transmission case 18a and crank case 21, and the supercharge tank 37 is likewise mounted fixedly on the top surface of the transmission case 18a through vibration proof rubbers, and/or the carburetor 32 is likewise mounted fixedly to the cylinder block 22 through vibration proof rubbers, flexibility should be imparted to the induction pipe 40, and/or the first pressurized intake air pipe 42 and the second pressurized intake air pipe 45, and/or the second pressurized intake air pipe 45 and the third pressurized intake air pipe 30. However, this flexibility can be kept smaller than that to be imparted to the induction pipe 40, and/or the first pressurized intake air pipe 42 and the second pressurized intake air pipe 45 when the air cleaner 35 and/or the supercharge tank 37 is mounted fixedly to the side frames 2c. If the induction pipe 40 and/or the first pressurized intake air pipe 42 and the second pressurized intake air pipe 45, are subjected to a great deformation (eg, when traveling on a bumpy road), it might have an undesirable influence on the engine output.

In addition the system components 35-37 are mounted to the unit-swinging engine unit 15 itself, so that these components can be arranged collectively by making effective use of the vacant space around the engine such that the air cleaner 35 is disposed in the corner surrounded by the cylinder block 21 and the transmission case 18a, and the supercharge tank 37 between the transmission case 18a and the side frames 2c, and the whole engine including the supercharging system can be kept compact. This embodiment has further features, as described below.
1. As explained above the delivery port 21b is located at the upper part of the crank chamber 21c, so that the lubricating oil mixed into fresh air in the crank chamber 21c is prevented from flowing toward the combustion chamber. In addition, the oil drain return pipe 105 is connected to the bottom of the crank chamber 21c so as to return the collected lubricating oil to the upstream side of the oil strainer 101 or the oil pump 102, thereby reducing lubricating oil consumption.
2. The oil drain return pipe 105 is connected to the crank chamber 21c on the suction chamber side, so that the pressurized fresh air is mixed into the lubricating oil in the lubricating system (including the oil pump 102, the delivery pipe 103 etc), thereby preventing seizure due to lack of lubricating oil.
3. The pressurized fresh air outlet 37b of the supercharge tank 37 is located above the inlet 37a. As a result, the supercharge tank 37 serves as a means for preventing the lubricating oil mixed into fresh air in the crank chamber from flowing toward the combustion chamber. The oil drain return pipe 105 is connected to the bottom of the supercharge tank 37 so as to return the collected lubricating oil to the upstream side of the oil strainer 101 or the oil pump 102, so that lubricating oil consumption can be reduced. The flow rate of the pressurized fresh air is decreased especially in the supercharge tank 37, so that the mist-like lubricating oil in the pressurized fresh air tends to fall, thereby facilitating the separation of the lubricating oil from the pressurized fresh air. An oil plug may be provided at the bottom of the supercharge tank 37 so as to collect the lubricating oil every time it accumulates.
4. The first pressurized intake air pipe 42 is cooled by the air cooling fins 42a, which improves the filling efficiency of the fresh air inducted into the combustion chamber, thereby effecting higher engine performance.
5. The first pressurized intake air pipe 42 integrated with the cooling fins 42a acting as a cooling means, is disposed on the upstream side of the carburetor 31, so that the carburetor is less heated and vapor is less generated in the narrow fuel pipes in the carburetor 31, thereby preventing lack of fuel supply caused by this vapor generation, ie, vapor lock.

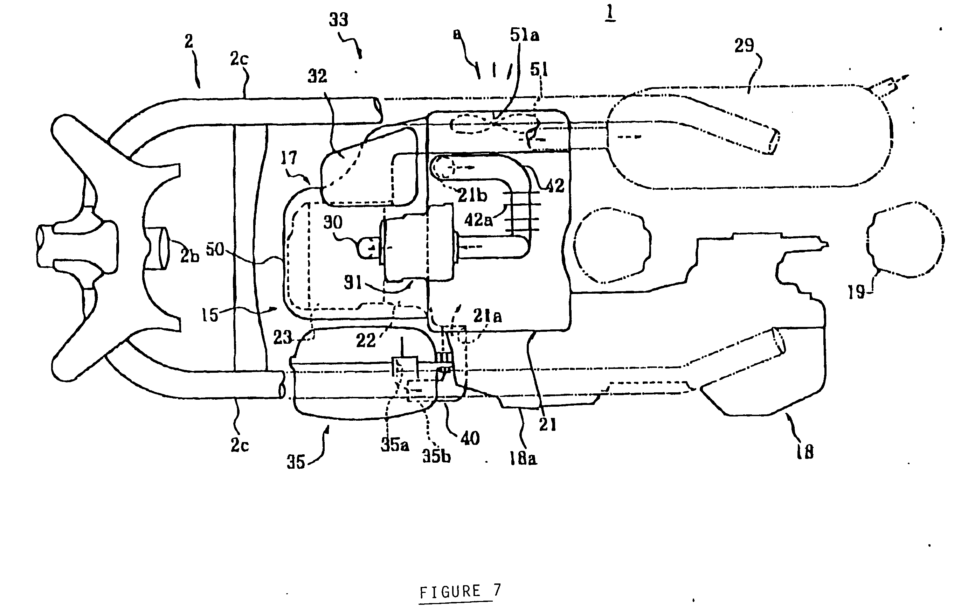

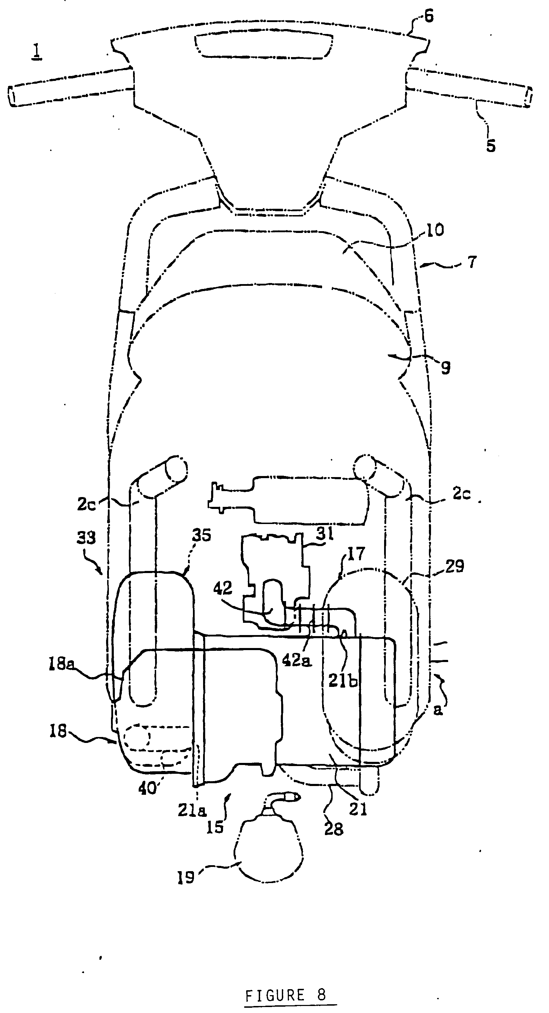

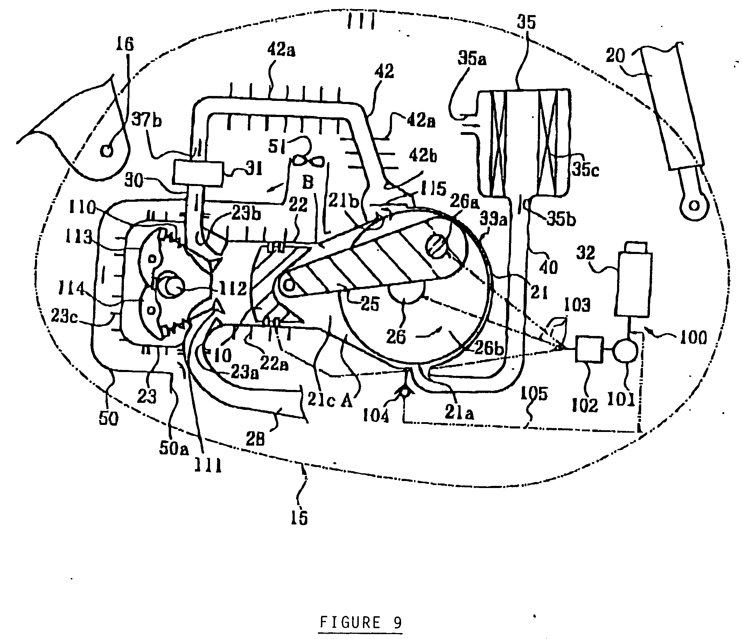

A scooter type motorcycle carrying an engine incorporating a supercharged engine according to a second embodiment will be described with reference to Fig. 7 through Fig. 9. In this embodiment the supercharge tank 37 and the second pressurized intake air passage 45 are removed from the scooter type motorcycle carrying the supercarged engine of the first embodiment, and the delivery port 21b of the crank case 21 and the carburetor 31 are connected directly by a first pressurized intake air passage 42. The first pressurized intake air passage 42 is provided, on the reed valve side, with an large end 42b having a larger cross section than the other part of the passage, and if the volumes of this large end, the other part of the first pressurized intake air passage 42, and the third pressurized intake air passage 30, amount to an adequate value, functions of storing pressurized fresh air and normalizing pressurized pressure can be fulfilled.

This embodiment, like the first one, is also characterized by the advantages of reduction of lubricating oil consumption due to the upwardly arranged delivery port, 21b in the crank chamber 21c and also recycling of the lubricating oil by means of the oil drain return pipe 104, prevention of lack of lubrication as a result of the oil drain return pipe 104 being connected to the crank chamber 21c on the suction chamber side, improved engine performance due to cooling of the first pressurized intake air pipe 42 by means of the air cooling fins 42a, and prevention of vapor lock in the carburetor 31 due to cooling of the pressurized fresh air on the upstream side of the carburetor 31.

According to an embodiment of the invention as described above, the engine unit is fitted with an air cleaner disposed on the upstream side of the supercharge system for filtering fresh air, and said air cleaner, supercharge system, and pressurized intake air passage are arranged for swinging movement together with said engine unit. Therefore no great flexibility is necessary in the intake system connecting these components, and the structure can be simplified by as much degree as the piping is simplified. In addition, these components are disposed collectively on the engine unit, so that the layout space is reduced to a necessary minimum. As a result, a light weight and compact vehicle can be realized by incorporating a supercharge system capable of avoiding complicated structure and increased size of the whole system.

According to another embodiment of the invention, a supercharge tank for reducing pressure variation of pressurized fresh air is provided in the middle of the pressurized intake air passage and arranged for swinging movement together with the engine unit. Therefore, the supercharge tank is disposed more collectively on the engine unit, so that the layout space is reduced to a necessary minimum. As a result, a light weight and compact vehicle can be realized by incorporating the supercharge system capable of avoiding complicated structure and increased size of the whole system.

According to a further embodiment of the invention, cooling means for cooling pressurized fresh air is also disposed collectively by making effective use of the vacant space around the engine, so that the whole engine including the supercharge system can be kept compact.

## Claims

1. Vehicle (1) having a supercharged internal combustion engine unit (15) pivotably mounted on a body frame (2) of said vehicle (1), said engine unit (15) comprising an engine body (17) and a rear wheel transmission (18) integrally fastened to each other, and a supercharge system (33), **characterized by** an air cleaner (35) disposed on the upstream side of the supercharge system (33) for filtering fresh air, said air cleaner (35) and said supercharge system (33) are fastened to said engine unit (15) for pivotal movement together with said engine unit (15).

2. Vehicle according to claim 1, **characterized in that** the supercharge system (33) comprising a pressurized intake air passage (42, 45, 30) for inducing compressed fresh air into a combustion chamber via an intake port (23b) operable by an intake valve (110).

3. Vehicle according to claim 2, **characterized in that** a supercharge tank (37) for reducing pressure variations of the pressurized fresh air being provided in the intake air passage (42, 45, 30), said supercharge tank (37) being mounted to the engine unit (15) and arranged for pivotal movement together with the engine unit (15).

4. Vehicle according to at least one of the preceding claims 1 to 3, **characterized by** cooling means (42a) provided at the pressurized intake air passage (42, 45, 30) for cooling the pressurized fresh air.

5. Vehicle according to at least one of the preceding claims 1 to 4, **characterized in that** said supercharge system (33) comprising a connecting rod type supercharging system (33a).

6. Vehicle according to claim 5, **characterized in that** outer surfaces of a connecting rod (25) are adapted to face, in sealing condition, to an inside circumferential wall of a crank case (21), right and left walls of piston cutouts, inside walls of right and left crown webs (26b), respectively, or the respective corresponding surfaces and walls are brought into contact with each other for tight sealing in sliding relation that the crank chamber (21) is dividable by said piston rod (25) into two chambers, a suction chamber (A) and a compression chamber (B) and the crank case (21) is formed with a suction port (21a) adapted to communicate with the suction chamber (A), and with a delivery port (21b) adapted to communicate with the compression chamber (B).

7. Vehicle according to claim 6, **characterized in that** the compression chamber (B) being disposed in the upper side and the suction chamber (A) being disposed at the lower side of said crank case (21) with respect to a ground said vehicle (1) may drive on, and that a crankshaft (26) is adapted to rotate in the same direction like proceeding wheels (3, 19) of said vehicle (1).

8. Vehicle according to at least one of the preceding claims 3 to 7, **characterized in that** said supercharge tank (37) being disposed between the rear wheel transmission (18) and side frames (2c) of said body frame (2).

9. Vehicle according to claim 8, **characterized in that** with respect to the normal driving direction in the lower rear wall of said supercharge tank (37) there is provided a fresh air inlet (37a) connected to a delivery port (21b) of the crank case (21) via a first pressurized intake air pipe (42) and at the upper front wall of said supercharge tank (37) there is provided an outlet (37b) being connected to the intake port (23b) via second and third pressurized intake air pipes (45, 30).

10. Vehicle according to claim 9, **characterized by** a carburetor (31) provided between the second and third pressurized intake air pipes (45, 30).

11. Vehicle according to at least one of the preceding claims 1 to 10, **characterized in that** said air cleaner (35) being disposed in a corner surrounded by a cylinder block (21) of said engine unit (15) and a transmission case (18a) of said rear wheel transmission (18).

12. Vehicle according to at least one of the preceding claims 9 to 11, **characterized in that** the first pressurized intake air pipe (42) is provided with cooling fins (42a) as the cooling means for the pressurized fresh air.

13. Vehicle according to at least one of the preceding claims 1 to 12, **characterized in that** said vehicle is a scooter type motorcycle (1).
